# EUROPÄISCHE PATENTANMELDUNG

(11) **EP 1 181 972 A1**
(43) Veröffentlichungstag der Anmeldung: **27.02.2002**
(21) Anmeldenummer: 01116881.2
(22) Anmeldetag: 11.07.2001
(51) Int. Cl.: B01D 53/94, F01N 3/20

(54) **Verfahren und Vorrichtung zur Zuführung eines Reduktionsmittels in eine Katalysatoreinrichtung**

(30) Priorität: 09.08.2000 DE 10038741
(71) Anmelder: Dr.Ing. h.c.F. Porsche Aktiengesellschaft, 70435 Stuttgart (DE); AUDI AG, 85045 Ingolstadt (DE); Bayerische Motoren Werke Aktiengesellschaft, 80809 München (DE); Volkswagen Aktiengesellschaft, 38436 Wolfsburg (DE)
(72) Erfinder: Goerigk, Christian, 70736 Fellbach-Oeffingen (DE); Illek, Michael, 70180 Stuttgart (DE); Wessels, Stefan, 21287 Weissach (DE)

(57) **Zusammenfassung**

Die vorliegende Erfindung schafft ein Verfahren und eine Vorrichtung zur Zuführung eines Reduktionsmittels in eine Katalysatoreinrichtung. Das Verfahren weist folgende Schritte auf: Bereitstellen eines ersten Behälters (3) mit festem Reduktionsmittel; Bereitstellen eines zweiten Behälters (4) mit einem Lösungsmittel für das feste Reduktionsmittel; Erzeugen einer Reduktionsmittellösung aus dem festem Reduktionsmittel und dem Lösungsmittel; Zwischenspeichern der Reduktionsmittellösung in einem dritten Behälter (6); und Zuführen der Reduktionsmittellösung aus dem dritten Behälter (6) in die Katalysatoreinrichtung.

## Beschreibung

### Stand der Technik

Die vorliegende Erfindung betrifft ein Verfahren und eine Vorrichtung zur Zuführung eines Reduktionsmittels in eine Katalysatoreinrichtung.

Neben Kohlenmonoxid (CO) und Kohlenwasserstoffen (HC) gehören insbesondere die Stickoxide (NOₓ) zu den umweltgefährdenden direkt emittierten Primärschadstoffen, die beim Betrieb von Verbrennungsmotoren, insbesondere Dieselmotoren, entstehen. Ein Einsatz von Dreiwege-Katalysatoren, wie sie bei λ = 1 geregelten Ottomotoren und Gasmotoren verwendet werden, ist aufgrund des Sauerstoffüberschusses im dieselmotorischen Abgas nicht möglich. Aus diesem Grunde wurde zur Reduktion der Stickoxidemission bei Dieselmotoren ein selektiv arbeitender SCR-Katalysator (SCR = Selective Catalytic Reduction) entwickelt, in dem mit einem zugeführten Reduktionsmittel, nämlich Ammoniak (NH₃), die ausgestoßenen Stickoxide zu N₂ und H₂O reduziert werden.

Bewährt hat sich diese Art der Reduktion von Stickoxidemisssionen bei stationären Dieselmotoren. Bei diesen stationären Anlagen ist in dem Abgasstrang des Verbrennungsmotors ein SCR-Katalysator angeordnet, wobei das dem Abgasstrom beizumengende NH₃ vor dem SCR-Katalysator durch Eindüsen dem Abgasstrom beigemengt wird. Das NH₃ wird bei solchen Anlagen als Gas oder als wässrige Lösung zugeführt. Bei einer Zuführung wässriger NH₃-Lösungen erfolgt eine thermolytische Aufspaltung im Abgasstrom bzw. im SCR-Katalysator, um das zur Reduktion der Stickoxide benötigte NH₃ freizusetzen. Die Zuführung des Reduktionsmittels erfolgt über eine Dosiervorrichtung, welche in Abhängigkeit von der erwarteten NOₓ-Menge im Abgasstrom des Dieselaggregats eingestellt wird.

Aufgrund des nicht ungefährlichen Umgangs mit NH₃ als Gas bzw. als wässrige Lösung ist man dazu übergegangen, das zur NOₓ-Reduktion benötigte NH₃ durch zuführen von wässriger Harnstofflösung in den Abgasstrom bereitzustellen. Die thermohydrolytische Aufspaltung unter Abgas von NH₃ als Reduktionsmittel erfolgt dann durch die Wärme des Abgasstroms bzw. des Katalysators.

Aus der DE 297 08 591 ist eine Vorrichtung zum Zuführen von Ammoniak in den Abgasstrom eines Verbrennungsmotors bekannt.

Aus der DE 43 15 278 A1 ist ein Verfahren zur Dosierung eines Reduktionsmittels in ein stickoxidhaltiges Abgas eines Verbrennungsmotors mit einem in einer Abgasleitung eingebauten Katalysator zur Stickoxidminderung bekannt. Bei diesem bekannten Verfahren wird die in das Abgas eingebrachte Reduktionsmittelrate in Abhängigkeit von betriebsrelevanten Parametern des Abgases, des Katalysators und gegebenenfalls des Motors eingestellt.

Insbesondere ist das Reduktionsmittel in Form von wässeriger Harnstofflösung in einem Reduktionsmitteltank in flüssiger Form bevorratet und wird über eine Reduktionsmittel-Zuführungsleitung einem Reduktionsmittel-Einspritzventil zugeführt. Mittels dieses Reduktionsmittel-Einspritzventils wird das flüssige Reduktionsmittel vor den Katalysator eingespritzt.

Dieses bekannte Abgasnachbehandlungsverfahren hat den Nachteil, daß aufgrund der Speicherung und Beimengung von wässeriger Harnstofflösung eine große Masse bzw. ein großes Volumen dieses Reduktionsmittels mitgeführt werden muss, um während eines vernünftigen Wartungsintervalls von beispielsweise 30.000 km kein Betanken mit Reduktionsmittel durch den Kunden zu erfordern.

Eine Aufgabe der vorliegenden Erfindung liegt darin, ein Verfahren und eine Vorrichtung zur Zuführung eines Reduktionsmittels in eine Katalysatoreinrichtung zu schaffen, welche eine kleinere Masse bzw. ein kleineres Volumen an mitzuführendem Reduktionsmittel erfordern.

### Vorteile der Erfindung

Das erfindungsgemäße Verfahren mit den Merkmalen des Anspruchs 1 bzw. die entsprechende Vorrichtung nach Anspruch 11 weist den Vorteil auf, daß die Masse bzw. das Volumen des mitzuführenden festen Reduktionsmittels im Vergleich zum üblichen flüssigen Reduktionsmittel drastisch reduziert werden.

Das erfindungsgemäße Verfahren kombiniert die Vorteile des festen Reduktionsmittels, zum Beispiel Harnstoff oder anderer löslicher NH₃-abspaltender Substanzen, mit der einfachen Dosierung von flüssigem Reduktionsmittel.

Die der vorliegenden Erfindung zugrunde liegende Idee liegt darin, daß festes Reduktionsmittel, zum Beispiel in Form von Pulver, Presslingen oder Monolithen, an Bord mitgeführt wird. Weiterhin wird ein entsprechendes Lösungsmittel in einem separaten Tank mitgeführt oder aus vorhandenen Quellen abgesondert. Zweckmäßigerweise ist ein Zwischenspeicher vorgesehen, in dem das Reduktionsmittel als flüssige Lösung vorliegt. Das feste Reduktionsmittel und das Lösungsmittel werden mittels einem geeigneten Dosier- bzw. Mischsystem miteinander vermengt, um eine bestimmte Konzentration zu erhalten. Die flüssige Reduktionsmittellösung wird dann, wie bekannt, einer Pumpe und einem Einspritzventil zugeführt, um es gesteuert oder geregelt in den Abgasstrang einzudosieren. Der Kunde muß lediglich Wasser nachfüllen, falls kein Regenwasser oder Kondensat aus einem Klimakompressor u. ä. vorhanden ist.

In den Unteransprüchen finden sich vorteilhafte Weiterbildungen und Verbesserungen der Erfindung.

Gemäß einer bevorzugten Weiterbildung wird das Erzeugen der Reduktionsmittellösung durch dosiertes Einleiten des festen Reduktionsmittels und des Lösungsmittels in den dritten Behälter durchgeführt.

Gemäß einer weiteren bevorzugten Weiterbildung wird das Erzeugen der Reduktionsmittellösung durch dosiertes Einleiten des festen Reduktionsmittels und des Lösungsmittels in eine zwischen dem ersten Behälter und dem dritten Behälter (6) vorgesehene Mischeinrichtung durchgeführt. Dabei wird die Reduktionsmittellösung von der Mischeinrichtung in den dritten Behälter geleitet.

Gemäß einer weiteren bevorzugten Weiterbildung wird die Konzentration der Reduktionsmittellösung gemessen und das dosierte Einleiten derart gesteuert, daß eine vorbestimmbare Konzentration eingestellt wird.

Gemäß einer weiteren bevorzugten Weiterbildung wird das feste Reduktionsmittel pulverisiert.

Gemäß einer weiteren bevorzugten Weiterbildung wird das feste Reduktionsmittel in vorgepreßten Masseneinheiten bereitgestellt.

Gemäß einer weiteren bevorzugten Weiterbildung wird das feste Reduktionsmittel als stranggepreßter Grundkörper bereitgestellt.

Gemäß einer weiteren bevorzugten Weiterbildung wird der Grundkörper zum Erzeugen der Reduktionsmittellösung in das Lösungsmittel oder die Reduktionsmittellösung eingetaucht.

Gemäß einer weiteren bevorzugten Weiterbildung wird die Eintauchzeit in Abhängigkeit von einer gewünschten oder erfaßten Konzentration bestimmt.

Gemäß einer weiteren bevorzugten Weiterbildung ist das Lösungsmittel Wasser, welches durch Auskondensieren gewonnen wird.

### Zeichnungen

Ausführungsbeispiele der Erfindung sind in den Zeichnungen dargestellt und in der nachfolgenden Beschreibung näher erläutert.

Es zeigen:
- Fig. 1: eine schematische Darstellung einer Brennkraftmaschine mit einer Katalysatoreinrichtung und einer Vorrichtung zur Zuführung eines Reduktionsmittels gemäß einer ersten bevorzugten Ausführungsform der vorliegenden Erfindung;
- Fig. 2: eine schematische Darstellung einer Brennkraftmaschine mit einer Katalysatoreinrichtung und einer Vorrichtung zur Zuführung eines Reduktionsmittels gemäß einer zweiten bevorzugten Ausführungsform der vorliegenden Erfindung; und
- Fig. 3: eine schematische Darstellung einer Brennkraftmaschine mit einer Katalysatoreinrichtung und einer Vorrichtung zur Zuführung eines Reduktionsmittels gemäß einer dritten bevorzugten Ausführungsform der vorliegenden Erfindung.

### Beschreibung der Ausführungsbeispiele

In den Figuren bezeichnen gleiche Bezugszeichen gleiche oder funktionsgleiche Komponenten.

Bei den hier gezeigten drei Ausführungsbeispielen basiert die Abgas-Nachbehandlung auf einem motornahen Oxidationskatalysator 1 und einem nach dem Ammoniak-Reduktionsverfahren arbeitendem Reduktionskatalysator 2 zur NOₓ-Reduktion.

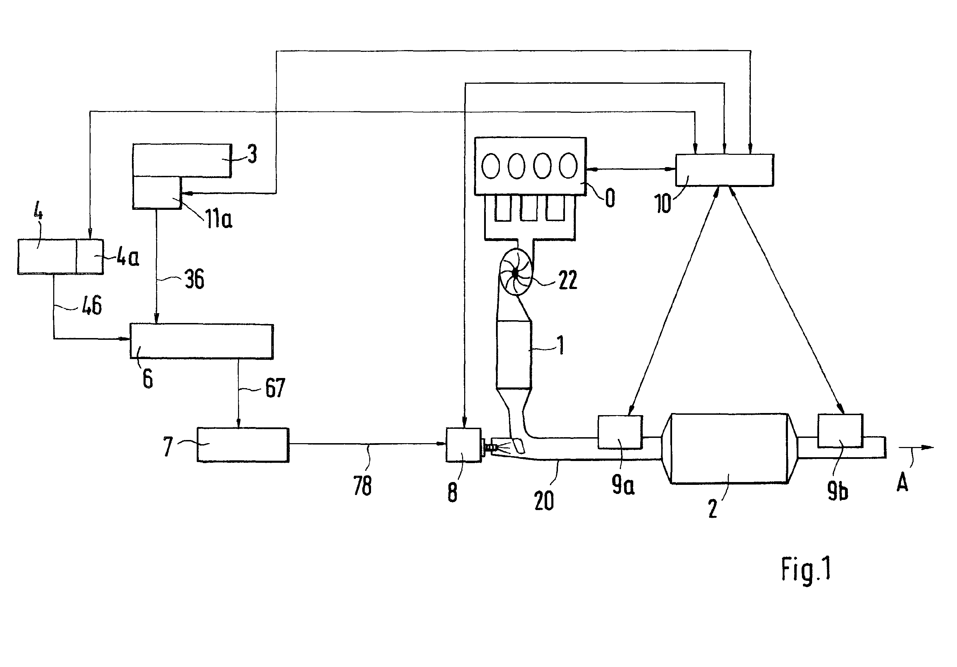

Fig. 1 zeigt eine schematische Darstellung einer Brennkraftmaschine mit einer Katalysatoreinrichtung und einer Vorrichtung zur Zuführung eines Reduktionsmittels gemäß einer ersten bevorzugten Ausführungsform der vorliegenden Erfindung.

In Figur 1 bezeichnen 0 eine vierzylindrige Brennkraftmaschine, 1 einen Oxidationskatalysator, 2 einen Reduktionskatalysator, 3 einen Reduktionsmittelbehälter für festes Reduktionsmittel, 4 einen Behälter für Wasser als Lösungsmittel für das feste Reduktionsmittel in Form von Harnstoff, in diesem Beispiel ein separater nachfüllbarer Wassertank, 4a eine Dosiereinrichtung für Wasser, 11a eine Dosiereinrichtung für das feste Reduktionsmittel, 6 einen Tank für wässerige Reduktionsmittellösung, 7 eine Reduktionsmittelpumpe, 8 ein Einspritzventil, 9a, 9b Sensoreinheiten zur Erfassung von Temperatur und NOₓ-Gehalt und 10 ein Steuergerät. Weiterhin bezeichnet 20 eine Abgasleitung, 22 einen Turbolader, A die Richtung des austretenden gereinigten Abgases, 46 eine Leitung zwischen dem Wasserbehälter 4 und dem Behälter 6 für die Reduktionsmittellösung, 36 eine Leitung zwischen dem Behälter für das feste Reduktionsmittel 3 und dem Behälter 6 für die Reduktionsmittellösung, 67 eine Leitung zwischen dem Behälter 6 für die Reduktionsmittellösung und der Reduktionsmittelpumpe 7 und 78 eine Leitung zwischen der Reduktionsmittelpumpe 7 und dem Einspritzventil 8.

Das Steuergerät 10 ist an das Motorsteuergerät gebunden oder darin integriert. Das Steuergerät 10 empfängt Informationen der Sensoreinheiten 9a, 9b und steuert die Einspritzmenge des Einspritzventils 8 für das flüssige Reduktionsmittel entsprechend den jeweiligen Betriebsbedingungen, zum Beispiel Last, Drehzahl, Temperatur u.ä.. Außerdem steuert das Steuergerät 10 die Dosiereinrichtung 11a für das feste Reduktionsmittel und die Dosiereinrichtung 4a für das Wasser. Diese Steuerfunktionen sind durch Doppelpfeile angedeutet.

Die Aufbereitung des festen Reduktionsmittels vollzieht sich folgendermaßen. In vorbestimmten Intervallen werden in den Behälter 6 für das flüssige Reduktionsmittel vorbestimmte Mengen an Wasser und festem Reduktionsmittel - in Pulverform - zudosiert, um stets eine Reduktionsmittellösung bestimmter Konzentration in dem Behälter 6 vorliegen zu haben. Dieses Zudosierungsintervall kann vom Füllstand abhängig gemacht werden. Die Menge des mitgeführten festen Reduktionsmittels in Pulverform kann so bemessen sein, daß durch die entsprechende Lösung ein Nachfüllintervall von typischerweise 30.000 km erzielbar ist, wohingegen die Wassermenge wesentlich geringer ist, z.B. 5 Liter. Der Transport des pulverförmigen Reduktionsmittels zur Dosierung und Mischung ist mittels bekannter Einrichtungen, wie z.B. Förderschnecke (Archimedes-Prinzip), Rütteltrichter, Förderband o.ä. bewerkstelligbar.

Die Zudosierung des flüssigen Reduktionsmittels in die Abgasleitung 20 erfolgt in bekannter Weise mittels der Reduktionsmittelpumpe 7 und dem Einspritzventil 8 unter Steuerung durch das Steuergerät 10. Diese Zudosierung des flüssigen Reduktionsmittels in den Abgasstrom kann insbesondere kennfeldgesteuert oder zum Beispiel mittels der NOₓ-Senso-ren 9a, 9b geregelt erfolgen.

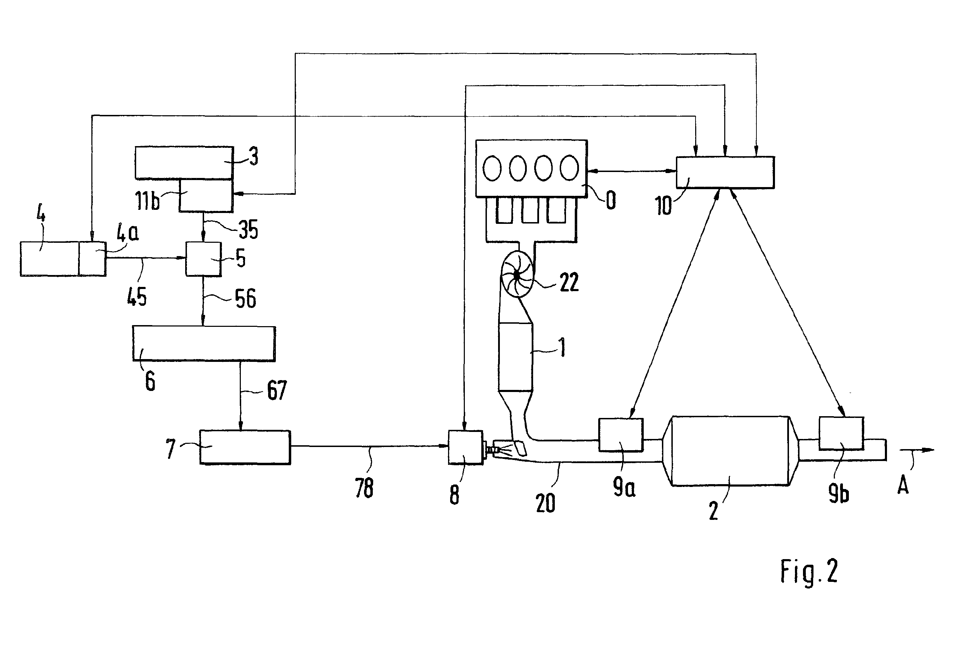

Fig. 2 zeigt eine schematische Darstellung einer Brennkraftmaschine mit einer Katalysatoreinrichtung und einer Vorrichtung zur Zuführung eines Reduktionsmittels gemäß einer zweiten bevorzugten Ausführungsform der vorliegenden Erfindung.

In Figur 2 bezeichnen zusätzlich zu den bereits eingeführten Bezugszeichen 11b eine modifizierte Dosiereinheit für das feste Reduktionsmittel - hier in Pillenform vorliegend -, 5 eine zusätzliche Mischeinrichtung, 35 eine Leitung zwischen dem Behälter 3 für das feste Reduktionsmittel und der Mischeinrichtung 5, 45 eine Leitung zwischen dem Wasserbehälter 4 und der Mischeinrichtung 5 sowie 56 eine Leitung zwischen der Mischeinrichtung 5 und dem Behälter für die Reduktionsmittellösung.

Bei dieser zweiten Ausführungsform erfolgt die Mischung und Zudosierung in der Mischeinrichtung 5, bevor die fertige Reduktionsmittellösung über die Leitung 56 in den Behälter 6 für die Reduktionsmittellösung zur dortigen Zwischenspeicherung weitergeleitet wird.

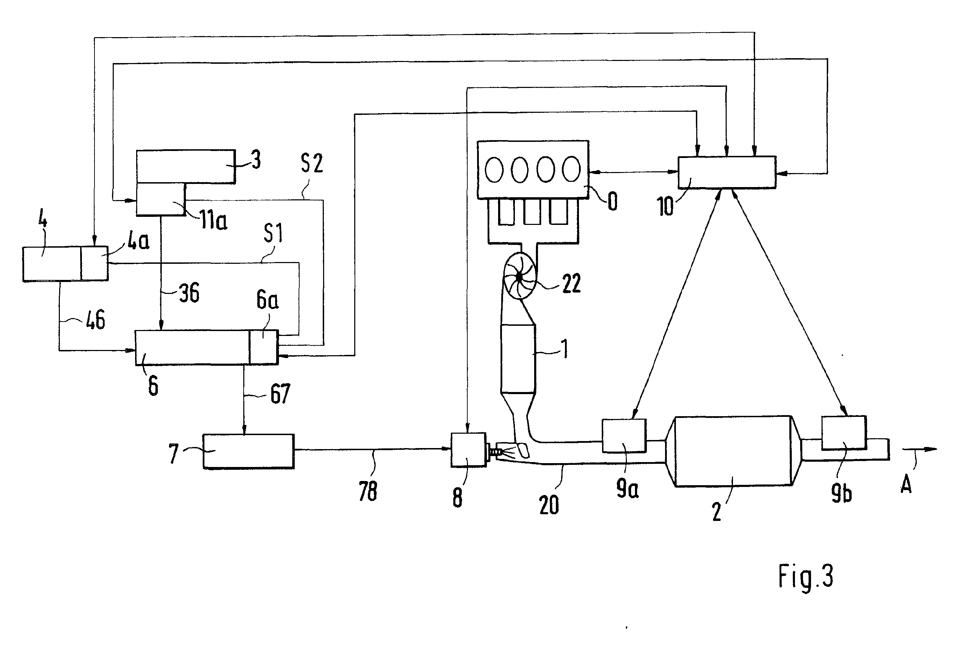

Fig. 3 zeigt eine schematische Darstellung einer Brennkraftmaschine mit einer Katalysatoreinrichtung und einer Vorrichtung zur Zuführung eines Reduktionsmittels gemäß einer dritten bevorzugten Ausführungsform der vorliegenden Erfindung.

Bei der in Figur 3 gezeigten dritten Ausführungsform bezeichnen zusätzlich zu den bereits eingeführten Bezugszeichen 6a einen Konzentrationssensor in Form eines Dichtesensors und S1 und S2 Sensorleitungen zwischen dem Konzentrationssensor 6a und der Dosiereinrichtung 4a bzw. der Dosiereinrichtung 11a, wobei die Einrichtungen 6a, 4a und 11a mit dem Steuergerät verbunden sind.

Im Unterschied zur obigen ersten und zweiten Ausführungsform wird bei dieser dritten Ausführungsform die Konzentration der Reduktionsmittellösung im Behälter 6 durch den Konzentrationssensor 6a überwacht und eine Nachdosierung von Wasser bzw. von festem Reduktionsmittel veranlaßt, wenn diese erfaßte Konzentration von einem vorbestimmten Sollwert abweicht, bis die gewünschte Dichte erreicht ist. Dies ermöglich eine besonders genaue Einstellung der Konzentration der Reduktionsmittellösung.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Obwohl bei dem obigen Beispiel das benötigte Wasser durch einen zusätzlichen Nachfüllbehälter bereitgestellt wurde, ist die Erfindung nicht darauf beschränkt. Es kommt auch die Nutzung des Scheibenwaschwassers, die Nutzung des Kondenswassers des Klimakompressors, das Sammeln von Regenwasser in einem Extratank oder die Nutzung des im Abgas vorhandenen Wassers durch Auskondensieren in Frage.

Das feste Reduktionsmittel kann pulverförmig, pillenförmig oder monolithisch vorliegen. Das benötigte feste Reduktionsmittel kann auch folgendermaßen zudosiert werden:
in diskreten, vorgepreßten Massen (Pillenform) mittels Förderschnecke, Rütteltrichter, Förderband;
Teile eines beispielsweise stranggepreßten Grundkörpers werden mittels geeignetem Schaber, Bürste u. ä. zu Pulver verarbeitet und dann mittels Förderschnecke, Rütteltrichter, Förderband zudosiert;
ein beispielsweise stranggepreßter Grundkörper wird mittels einem Kolben in den Behälter mit wässeriger Reduktionsmittellösung eingeführt und dort mit einer Schneidevorrichtung die gewünschte Reduktionsmittelmenge abgeschnitten (die Schneidevorrichtung verschließt nach dem Schneidevorgang den Behälter mit festem Reduktionsmittel);
ein monolithischer Reduktionsmittelkörper wird in den Behälter mit wässeriger Reduktionsmittellösung getaucht, bis die gewünschte Leitfähigkeit/Dichte durch das Lösen des Reduktionsmittels erreicht ist;
eine wässerige Reduktionsmittellösung wird durch den Reduktionsmittelbehälter gepumpt, bis die gewünschte Leitfähigkeit/Dichte durch das Lösen des Reduktionsmittels erreicht wird.

Selbstverständlich kommen zur Aufbereitung des festen Reduktionsmittels auch alle sonstigen im Stand der mechanischen Verfahrenstechnik bekannten Dosierverfahren für Feststoffe in Frage.

Als feste Reduktionsmittel können beispielsweise alle wasserlöslichen NH₃-abspaltenden Substanzen eingesetzt werden, wie zum Beispiel Harnstoff, Ammoniumcarbamat, Ammoniumcarbonat, etc.

Die einzustellende Konzentration kann je nach Eigenschaft der entstehenden Lösung beispielsweise auch durch Erfassung der elektrischen Leitfähigkeit oder eines anderen relevanten Parameters erfaßt werden.

Der Lösungsvorgang im Behälter 6 bzw. in der Mischkammer 5 kann unterstützt werden durch Beheizung, Rührvorrichtungen oder andere dem Stand der Technik bekannte, den Lösungsvorgang beschleunigende Verfahren.

Zur Lösung der Einfrierproblematik kann eine Beheizung des Tanks oder eines Teilbereichs des Tanks sowie der Leitungen, der Pumpe und des Ventils erfolgen. Weiterhin besteht die Möglichkeit der temperaturabhängigen Zufuhr von Zusatzmitteln zur Absenkung des Gefrierpunktes.

Neben einer Überwachung zur Feststellung, wann die Dichte der Reduktionsmittellösung vom Sollwert abweicht, also festes Reduktionsmittel bzw. Lösungsmittel nachgefüllt werden muß, kann überwacht werden wann der Füllstand der Reduktionsmittellösung an sich zu niedrig ist, und es können ebenso die Pumpe, das Einspritzventil und der Katalysator separat überwacht werden.

## Patentansprüche

1. Verfahren zur Zuführung eines Reduktionsmittels in eine Katalysatoreinrichtung mit den Schritten:
Bereitstellen eines ersten Behälters (3) mit festem Reduktionsmittel;
Bereitstellen eines zweiten Behälters (4) mit einem Lösungsmittel für das feste Reduktionsmittel;
Erzeugen einer Reduktionsmittellösung aus dem festem Reduktionsmittel und dem Lösungsmittel;
Zwischenspeichern der Reduktionsmittellösung in einem dritten Behälter (6); und
Zuführen der Reduktionsmittellösung aus dem dritten Behälter (6) in die Katalysatoreinrichtung.

2. Verfahren nach Anspruch 1, **dadurch gekennzeichnet, daß** das Erzeugen der Reduktionsmittellösung durch dosiertes Einleiten des festen Reduktionsmittels und des Lösungsmittels in den dritten Behälter (6) durchgeführt wird.

3. Verfahren nach Anspruch 1, **dadurch gekennzeichnet, daß** das Erzeugen der Reduktionsmittellösung durch dosiertes Einleiten des festen Reduktionsmittels und des Lösungsmittels in eine zwischen dem ersten Behälter (3) und dem dritten Behälter (6) vorgesehene Mischeinrichtung (5) durchgeführt wird und daß die Reduktionsmittellösung von der Mischeinrichtung (5) in den dritten Behälter (6) geleitet wird.

4. Verfahren nach einem der Ansprüche 2 oder 3, **dadurch gekennzeichnet, daß** die Konzentration der Reduktionsmittellösung gemessen wird und das dosierte Einleiten derart gesteuert wird, daß eine vorbestimmbare Konzentration eingestellt wird.

5. Verfahren nach einem der Ansprüche 1 bis 4, **dadurch gekennzeichnet, daß** das feste Reduktionsmittel pulverisiert wird.

6. Verfahren nach einem der Ansprüche 2 bis 4, **dadurch gekennzeichnet, daß** das feste Reduktionsmittel in vorgepreßten Masseneinheiten bereitgestellt wird.

7. Verfahren nach einem der Ansprüche 2 bis 4, **dadurch gekennzeichnet, daß** das feste Reduktionsmittel als stranggepreßter Grundkörper bereitgestellt wird.

8. Verfahren nach Anspruch 7, **dadurch gekennzeichnet, daß** der Grundkörper zum Erzeugen der Reduktionsmittellösung in das Lösungsmittel oder die Reduktionsmittellösung eingetaucht wird.

9. Verfahren nach Anspruch 8, **dadurch gekennzeichnet, daß** die Eintauchzeit in Abhängigkeit von einer gewünschten oder erfaßten Konzentration bestimmt wird.

10. Verfahren nach einem der vorhergehenden Ansprüche, **dadurch gekennzeichnet, daß** das Lösungsmittel Wasser ist, welches durch Auskondensieren gewonnen wird.

11. Vorrichtung zur Zuführung eines Reduktionsmittels in eine Katalysatoreinrichtung mit:
einem ersten Behälter (3) mit festem Reduktionsmittel;
einem zweiten Behälter (4) mit einem Lösungsmittel für das feste Reduktionsmittel; einer Reduktionsmittellösungs-Erzeugungseinrichtung (4a, 11a; 4a, 11b, 5) zum Erzeugen einer Reduktionsmittellösung aus dem festem Reduktionsmittel und dem Lösungsmittel;
einem dritten Behälter (6) zum Zwischenspeichern der Reduktionsmittellösung; und
einer Zuführungseinrichtung (7, 8) zum Zuführen der Reduktionsmittellösung aus dem dritten Behälter (6) in die Katalysatoreinrichtung.

12. Vorrichtung nach Anspruch 11, **dadurch gekennzeichnet, daß** die Reduktionsmittellösungs-Erzeugungseinrichtung (4a, 11a; 4a, 11b, 5) eine Dosiereinrichtung (4a; 11a) zum dosierten Einleiten des festen Reduktionsmittels und des Lösungsmittels in den dritten Behälter (6) aufweist.

13. Vorrichtung nach Anspruch 11, **dadurch gekennzeichnet, daß** die Reduktionsmittellösungs-Erzeugungseinrichtung (4a, 11a; 4a, 11b, 5) eine Dosiereinrichtung (4a; 11b) zum dosierten Einleiten des festen Reduktionsmittels und des Lösungsmittels in eine zwischen dem ersten Behälter (3) und dem dritten Behälter (6) vorgesehene Mischeinrichtung (5) und eine Leitungseinrichtung (56) zum Leiten der Reduktionsmittellösung von der Mischeinrichtung (5) in den dritten Behälter (6) aufweist.

14. Vorrichtung nach einem der Ansprüche 12 oder 13, **gekennzeichnet durch** eine Konzentrationssensoreinrichtung zum Messen der Konzentration der Reduktionsmittellösung und eine Steuereinrichtung zum Steuern des dosierten Einleitens derart, daß eine vorbestimmbare Konzentration einstellbar ist.

15. Vorrichtung nach einem der Ansprüche 11 bis 14, **gekennzeichnet durch** eine Pulverisierungseinrichtung zum Pulverisieren des festen Reduktionsmittels.

16. Vorrichtung nach einem der Ansprüche 11 bis 14, **gekennzeichnet durch** eine Schneideeinrichtung zum Schneiden des festen Reduktionsmittels.

17. Vorrichtung nach einem der Ansprüche 11 bis 16, **dadurch gekennzeichnet, daß** das Lösungsmittel Wasser ist und durch eine Kondensationseinrichtung aus dem Abgas oder einem Klimatisierungssystem bereitstelbar ist.
